# EUROPÄISCHE PATENTSCHRIFT

(11) **EP 3 153 296 B1**
(45) Veröffentlichungstag und Bekanntmachung des Hinweises auf die Patenterteilung: **06.02.2019**
(21) Anmeldenummer: 16191191.2
(22) Anmeldetag: 28.09.2016
(51) Int. Cl.: B29C 47/12, B29C 47/22, B29C 47/06, B29D 23/18, B29C 49/00, B29C 47/92

(54) **SPRITZKOPF FÜR EINE VORRICHTUNG ZUR HERSTELLUNG EINES VERBUNDROHRES**
EXTRUSION HEAD FOR A DEVICE FOR PRODUCING A COMPOSITE PIPE
TÊTE D'EXTRUSION POUR UN DISPOSITIF DE FABRICATION D'UN TUYAU COMPOSITE

(30) Priorität: 06.10.2015 DE 102015219221
(43) Veröffentlichungstag der Anmeldung: 12.04.2017
(73) Patentinhaber: Hegler, Ralph Peter, 97688 Bad Kissingen (DE)
(72) Erfinder: Hegler, Ralph Peter, 97688 Bad Kissingen (DE)
(74) Vertreter: Rau, Schneck & Hübner Patentanwälte Rechtsanwälte PartGmbB

(56) Entgegenhaltungen:
- EP-A2- 0 509 216
- DE-U1- 9 321 573
- US-A1- 2004 074 554
- US-A1- 2005 106 280

## Beschreibung

Die Erfindung betrifft einen Spritzkopf nach dem Oberbegriff des Anspruches 1.

Bei einem derartigen aus der US 2005/0106280 A1 bekannten Spritzkopf weist eine Innen-Düsen-Einstell-Einrichtung einen am Innen-Düsen-Mantel angebrachten äußeren Düsen-Begrenzungskörper auf, der den inneren Schmelzekanal zum Teil und den sich anschließenden Innen-Düsen-Kanal auf der der Mittel-Längs-Achse abgewandten Seite vollständig begrenzt. Zwischen diesem Düsen-Mantel ist ein in den inneren Schmelzekanal ragender radial verstellbarer Kalibrierring vorgesehen, durch den die Weite des inneren Schmelzekanals über den Umfang verstellt werden kann, so dass über den Umfang unterschiedliche Strömungsquerschnitte für die Schmelze gebildet werden. Diese Ausgestaltung führt zu erheblichen Abdichtproblemen und damit der Gefahr von Betriebsstörungen. Im Übrigen ist diese Ausgestaltung außerordentlich aufwändig.

Bei einem aus der EP 0 834 386 A1 bekannten Spritzkopf sind die Innen-Düsen-Einstell-Einrichtung zur radialen Einstellung des Innen-Düsen-Querschnitts und die Außen-Düsen-Einstell-Einrichtung zur radialen Einstellung des Außen-Düsen-Querschnitts am außerhalb einer Formmaschine, also eines Korrugators, liegenden Ende angeordnet, sodass eine Einstellung auch während des Betriebs möglich ist. Mit solchen radialen Düsen-Einstell-Einrichtungen wird der Querschnitt eines zum jeweiligen Düsen-Austritt der Innen-Düse bzw. der Außen-Düse führenden Düsen-Kanals verändert und zwar über seinen Umfang, sodass über den Umfang verteilt die gewünschten Schmelzeströme dem eigentlichen jeweiligen Düsen-Austritt zugeführt werden können. Derartige relativ weit von der Innen-Düse bzw. der Außen-Düse entfernt angeordnete Düsen-EinstellEinrichtungen können bei Spritzköpfen und entsprechenden Formmaschinen für relativ kleine Nennweiten der herzustellenden Verbundrohre eingesetzt werden.

Aus der WO 99/50046 A1 und der EP 2 116 352 A1 ist es jeweils bekannt, über den Umfang verteilt unterschiedliche Querschnittsverengungen des Schmelzekanals durch radiale Verstellungen oder Verformungen vorzusehen. Dies führt zu erheblichen Abdichtproblemen und damit der Gefahr von Betriebsstörungen. Die Druckschriften EP 0 509 216 A2 und DE 93 21 573 U1 offenbaren weitere Spritzköpfe.

Die externe radiale Düsenzentrierung, insbesondere der Innen-Düsen, hat bei Spritzköpfen für Vorrichtungen zur Herstellung von Verbundrohren mit großer Nennweite, insbesondere Nennweiten größer DN 400, einen wesentlichen Nachteil, weil die Spritzköpfe und deren einzelne Bauteile sehr schwer sind und der gesamte Spritzkopf mehrere Tonnen schwer sein kann. Damit müssen von außen, das heißt von der jeweiligen Düsen-Einstell-Einrichtung über einen relativ langen Weg schwere Spritzkopf-Teile einschließlich der zähen thermoplastischen Kunststoff-Schmelze im inneren Schmelzekanal gegeneinander bewegt werden. Dies ist nur mit sehr hohem Kraftaufwand zu bewerkstelligen, konstruktiv aufwändig und damit für große Nennweiten der herzustellenden Verbundrohre äußerst unpraktisch. Dies gilt insbesondere hinsichtlich der Innen-Düsen-Einstell-Einrichtung. Der Erfindung liegt daher die Aufgabe zugrunde, einen Spritzkopf der gattungsgemäßen Art so auszugestalten, dass der für die radiale SpaltEinstellung der Innen-Düse erforderliche Aufwand reduziert wird.

Diese Aufgabe wird bei einem Spritzkopf der gattungsgemäßen Art durch die Merkmale im Kennzeichnungsteil des Anspruches 1 gelöst. Da die Mittel zur radialen Einstellung der Spaltweite des Innen-Düsen-Kanals vor und am Innen-Düsen-Austritt unmittelbar in diesem Bereich angeordnet sind, sind die zur Justierung notwendigen Kräfte minimiert. Eine Nachjustierung kann in einfacher Weise vorgenommen werden; hierzu muss lediglich der Spritzkopf aus der eigentlichen Formmaschine herausgezogen werden. Es müssen keine weiteren Teile des Spritzkopfes demontiert werden. Die gegeneinander zu verschiebenden Bauteile der Innen-Düse haben in der Praxis nur eine relativ geringe axiale Erstreckung, können demzufolge also mit einem geringstmöglichen Kraftaufwand bewegt bzw. eingestellt werden. Durch die erfindungsgemäße Ausgestaltung wird erreicht, dass der Schmelzedruck vor dem Innen-Düsen-Austritt während des Betriebs den abdichtenden Druck auf die Gleit-Flächen erhöht, wodurch eine sichere Abdichtung erreicht wird.

Anspruch 2 gibt für die Einstellung der Spaltweite des Außen-Düsen-Kanals eine mit Anspruch 1 vergleichbare Lösung mit entsprechend gleichen Vorteilen an.

Die Ansprüche 3 bis 5 geben vorteilhafte Weiterbildungen wieder.

Die Ansprüche 6 bis 11 geben die vergleichbare Ausgestaltung einer Außen-Düsen-Einstell-Einrichtung nach Anspruch 2 wieder.

Die erfindungsgemäße Innen-Düsen-Einstell-Einrichtung kann zusammen mit einer konventionellen Außen-Düsen-Einstell-Einrichtung oder zusammen mit der ebenfalls erfindungsgemäßen Außen-Düsen-Einstell-Einrichtung eingesetzt werden.

Weitere Einzelheiten, Vorteile und Merkmale ergeben sich aus der nachfolgenden Beschreibung von Ausführungsbeispielen anhand der Zeichnung. Es zeigt:
- Fig. 1: eine im Wesentlichen aus zwei Extrudern, einer Formmaschine und einer Nachkühlvorrichtung bestehende Anlage zur Herstellung von Verbundrohren mit Verbindungs-Muffen in Draufsicht in schematischer Darstellung,
- Fig. 2: einen Spritzkopf und das Einlaufende der Formmaschine im Horizontalschnitt und
- Fig. 3: einen Teilausschnitt aus Fig. 2 in gegenüber Fig. 2 vergrößertem Maßstab.

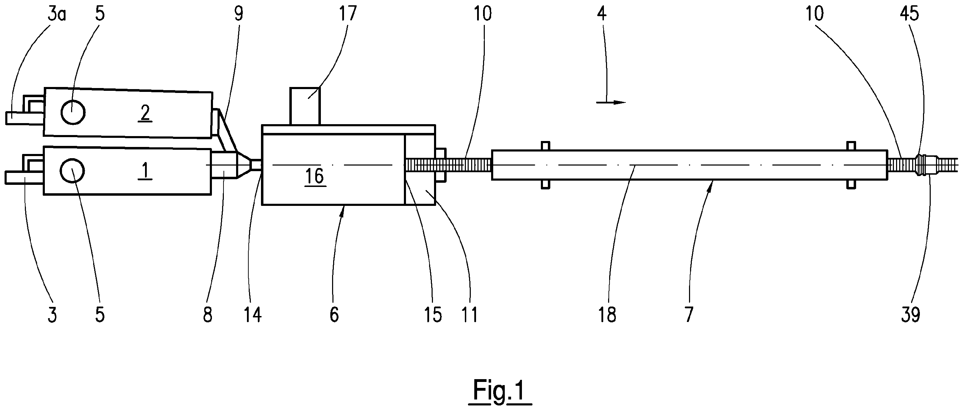

Die in Fig. 1 dargestellte Anlage zur Herstellung von Verbundrohren weist zwei Extruder 1, 2 auf. Diese werden jeweils von einem drehzahlregelbaren Antriebsmotor 3 bzw. 3a angetrieben, der - bezogen auf eine Förderrichtung 4 der gesamten Anlage - stromaufwärts vor den Zuführtrichtern 5 der Extruder 1, 2 vorgesehen ist.

Bezogen auf die Förderrichtung 4 stromabwärts von den Extrudern 1, 2 ist eine Formmaschine 6, ein so genannter Korrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8, also ein Extrusionswerkzeug, angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge zerschnitten werden.

Die Formmaschine 6 ist in ihrem Aufbau bekannt und in der Praxis üblich. Sie ist beispielsweise in der EP 0 563 575 B1 (entsprechend US-PS 5,320,797) beschrieben, worauf ausdrücklich verwiesen wird. Sie weist im Wesentlichen einen Maschinentisch 11 auf, auf dem Halbkokillen 12, 12a angeordnet sind. Die Halbkokillen 12, 12a werden auf dem Maschinentisch 11 in Förderrichtung 4 jeweils zu einem Kokillen-Paar 13 vereinigt und vom - bezogen auf die Förderrichtung 4 - stromaufwärtigen Einlaufende 14 zum stromabwärtigen Auslaufende 15 geführt, wobei wiederum in Förderrichtung 4 hintereinander folgende Kokillen-Paare 13 dicht an dicht liegen. Der Antrieb der auf einer Formstrecke 16 jeweils zu Kokillen-Paaren 13 zusammengeführten Halbkokillen 12, 12a erfolgt mittels eines Antriebsmotors 17. Der Transport der Halbkillen 12, 12a und der Kokillen-Paare 13 auf dem Maschinentisch 11 ist ausführlich in der EP 0 764 516 B1 (entsprechend US 5 693 347) dargestellt und beschrieben, worauf verwiesen werden darf.

Der Quer-Spritzkopf 8 weist zwei konzentrisch zu einer gemeinsamen Mittel-Längs-Achse 18 angeordnete Schmelzekanäle, nämlich einen inneren Schmelzekanal 19 und einen äußeren Schmelzekanal 20, auf, die - bezogen auf die Förderrichtung 4 - stromabwärts in einer Innen-Düse 21 bzw. einer Außen-Düse 22 enden. Der innere Schmelzekanal 19 ist an einen Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist. Zwischen der Innen-Düse 21 und der Außen-Düse 22 mündet aus dem Spritzkopf 8 ein ringzylindrischer und zur Achse 18 konzentrischer Stützluft- und Entlüftungs-Kanal 24 aus. Am - bezogen auf die Förderrichtung 4 - stromabwärtigen Ende des Spritzkopfes 8 ist an diesem ein Kalibrierdorn 25 angebracht, der ebenfalls konzentrisch zur Achse 18 verläuft.

Der Spritzkopf 8, also das Extrusionswerkzeug, ist vielteilig aufgebaut. Der innere Schmelzekanal 19 wird von einem Innen-Düsendorn 26 und einem Innen-Düsenmantel 27 begrenzt. Der äußere Schmelzekanal 20 wird von einem Außen-Düsendorn 28 und einem Außen-Düsenmantel 29 begrenzt, wobei die Beschreibung - bezogen auf die Achse 18 - von innen nach außen erfolgt ist. Zwischen dem Innen-Düsenmantel 27 und dem Außen-Düsendorn 28 ist der Stützluft- und Entlüftungs-Kanal 24 ausgebildet, und zwar als zur Achse 18 konzentrischer, im Wesentlichen ringzylindrischer Kanal.

Die Halbkokillen 12, 12a weisen ringförmige Formausnehmungen 33 auf, die in regelmäßigen Abständen hintereinander angeordnet sind und die jeweils an Teilvakuum-Kanäle 34 angeschlossen sind. Beim Einlauf der Halbkokillen 12, 12a in die Formstrecke 16 gelangen die Teilvakuum-Kanäle 34 an nicht dargestellte, in der EP 11 184 779.4 dargestellte und beschriebene Teilvakuum-Versorgungsquellen, sodass die Formausnehmungen 33 mit Teilvakuum beaufschlagt werden.

Die vom Extruder 2 durch den Spritzkanal 9 dem Spritzkopf 8 zugeführte Kunststoff-Schmelze strömt durch den äußeren Schmelzekanal 20 zur Außen-Düse 22 und wird dort unter Formung eines Außen-Schlauchs 35 extrudiert. Aufgrund des Teilvakuums und aufgrund von durch den Stützluft- und Entlüftungs-Kanal 24 zugeführter Stützluft legt sich dieser Außen-Schlauch 35 unter Formung eines mit ringförmigen Wellenbergen 36 ausgebildeten Schlauchs in die Formausnehmungen 33. Aus dem Extruder 1 wird durch den Spritzkanal 23 dem Quer-Spritzkopf 8 Kunststoff-Schmelze zugeführt und strömt durch den inneren Schmelzekanal 19 zur Innen-Düse 21 und tritt dort als Innen-Schlauch 37 aus, der auf den Kalibrier-Dorn 25 gelangt. Dieser erweitert sich von der Innen-Düse 21 in Förderrichtung 4 leicht nach außen, bis der Innen-Schlauch 37 gegen die Wellentäler 38 des Außen-Schlauchs 35 gelangt und hier mit diesem verschweißt wird. Der Innen-Schlauch 37 und der Außen-Schlauch 35 bilden nach Abkühlung unter Erstarrung das Verbundrohr 10.

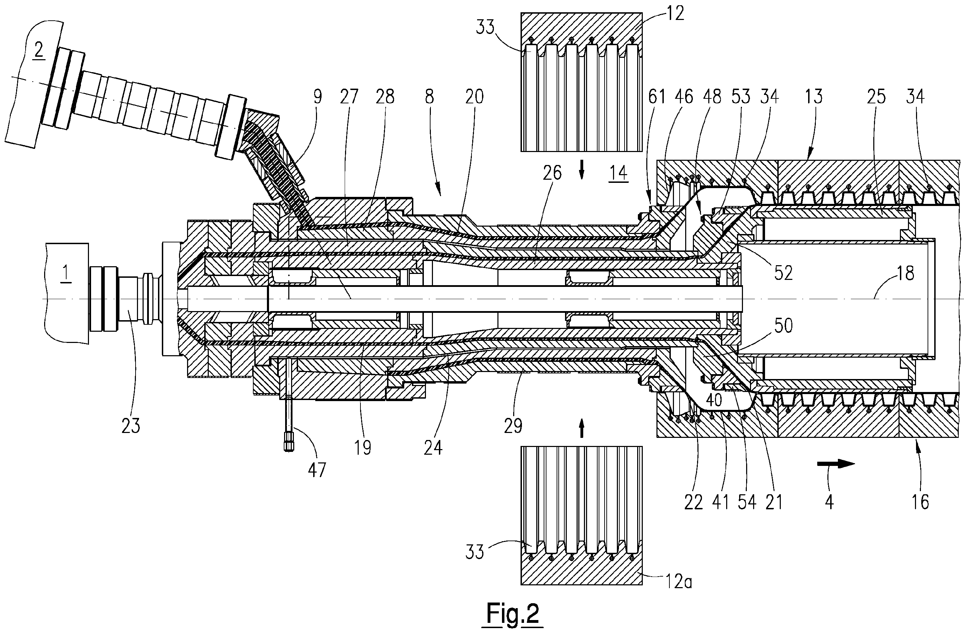

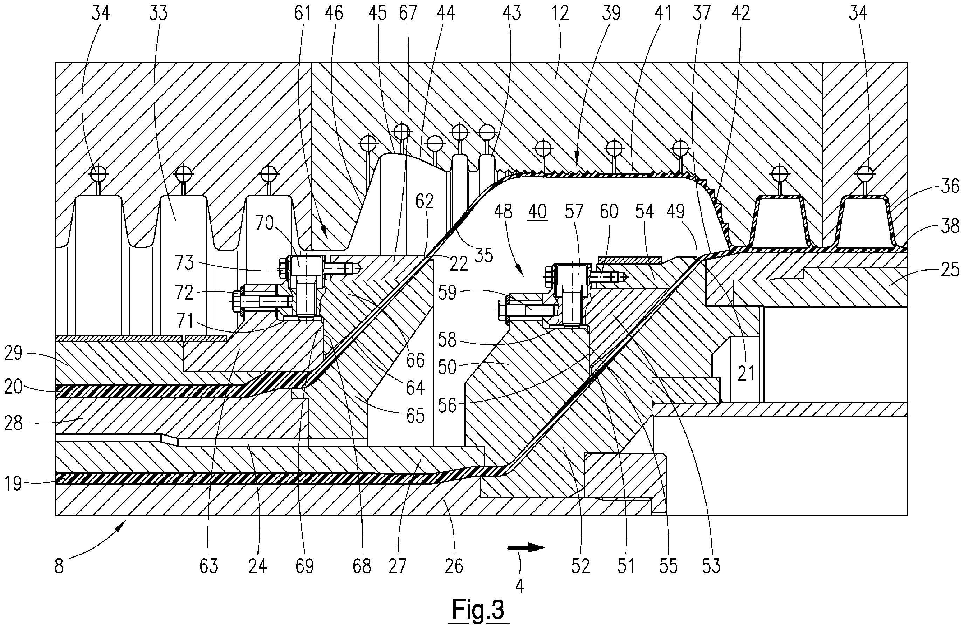

Wie insbesondere aus den Fig. 2 und 3 ersichtlich ist, sind die Halbkokillen 12, 12a so ausgebildet, dass jeweils in vorgegebenen Abständen innerhalb des endlos hergestellten Verbundrohres 10 Verbindungs-Muffen 39 ausgebildet werden. Hierzu ist in einem Paar von Halbkokillen 12, 12a eine Muffen-Ausnehmung 40 ausgebildet, die also eine im Wesentlichen glatte, zylindrische Wand 41 aufweist. Zwischen der Wand 41 der Muffen-Ausnehmung 40 und der in Förderrichtung 4 voreilenden Formausnehmung 33 ist eine Übergangs-Fläche 42 ausgebildet. An das - bezogen auf die Förderrichtung 4 - nacheilende Ende der Wand 41 der Muffen-Ausnehmung 40 schließen sich Umfangsrillen 43 zur Versteifung der Verbindungs-Muffe 39 und ein kegelstumpfförmiger Formabschnitt 44 an, in dem ein sich nach außen erweiterndes Einführende 45 der Muffe 39 ausgeformt wird. Daran schließt sich wiederum eine Übergangs-Fläche 46 an, die zur nächsten - in Förderrichtung 4 nacheilenden - Formausnehmung 33 führt.

Der Stützluft- und Entlüftungs-Kanal 24 erstreckt sich - wie Fig. 2 entnehmbar ist - über einen wesentlichen Teil der Erstreckung des Spritzkopfes 8 in Richtung der Achse 18. Im Bereich des - bezogen auf die Förderrichtung 4 - stromaufwärtigen Endes des Spritzkopfes 8 mündet, wie insbesondere Fig. 2 entnehmbar ist, in den Stützluft- und Entlüftungs-Kanal 24 ein Stützluft-Zuführrohr 47 ein. Es ist über eine Stützluft-Leitung mit einer Druckluftquelle verbunden.

Soweit die Anlage bis hierher beschrieben ist, ist sie aus EP 2 589 481 A1 bekannt.

Wie insbesondere Fig. 3 entnehmbar ist, kann die Innen-Düse 21 mittels einer Innen-Düsen-Einstell-Einrichtung 48 sowohl in Richtung der Mittel-Längs-Achse 18 als auch radial hierzu eingestellt werden, sodass die Spaltweite der Innen-Düse 21 im Bereich ihres Innen-Düsen-Austritts 49 eingestellt werden kann, und zwar auch mit über den Umfang des Innen-Düsen-Austritts 49 veränderlicher, also unterschiedlicher Spaltweite. Hierzu ist auf dem Innen-Düsenmantel 27 ein innerer Tragring 50 ortsfest angebracht, der den sich kegelstumpfförmig an den inneren Schmelzekanal 19 anschließenden Innen-Düsen-Kanal 51 auf der der Mittel-Längs-Achse 18 radial abgewandten Seite, also nach außen begrenzt. Auf seiner Innenseite wird der Innen-Düsen-Kanal 51 beginnend am inneren Schmelzekanal 19 bis zum Innen-Düsen-Austritt 49 durch einen Gegenring 52 mit kegelstumpfförmiger Außenfläche begrenzt, der am Innen-Düsendorn 26 ortsfest angebracht ist.

Auf dem inneren Tragring 50 ist ein innerer Radial-Einstell-Ring 53 angeordnet, auf dem wiederum ein innerer Axial-Einstell-Ring 54 angeordnet ist. Der innere Radial-Einstell-Ring 53 liegt mit einer radial zur Mittel-Längs-Achse 18 verlaufenden Anlagefläche 55 gegen eine entsprechend verlaufende Gegenfläche 56 des inneren Tragrings 50 an, sodass der innere Radial-Einstell-Ring 53 radial zur Mittel-Längs-Achse 18 auf dem inneren Tragring 50 verschoben werden kann, wodurch die Spaltweite des Innen-Düsen-Kanals 51 im Bereich des inneren Radial-Einstell-Rings 53 über den Umfang des Innen-Düsen-Kanals 51 unterschiedlich eingestellt werden kann. Eine derartige Einstellung erfolgt mittels mehrerer über den Umfang verteilter innerer Radial-Einstell-Schrauben 57, die im inneren Radial-Einstell-Ring 53 radial zur Mittel-Längs-Achse 18 verstellbar angeordnet sind und gegen eine zylindrische Ringfläche 58 anliegen, die am inneren Tragring 50 ausgebildet ist. Der innere Radial-Einstell-Ring 53 wird in einer mittels der inneren Radial-Einstell-Schrauben 57 eingestellten Position mittels mehrerer in gleichen Winkelabständen über den Umfang verteilter innerer Fixier-Schrauben 59 fest mit dem inneren Tragring 50 verbunden.

Der innere Axial-Einstell-Ring 54 ist auf dem inneren Radial-Einstell-Ring 53 spielfrei, also abdichtend in Richtung der Mittel-Längs-Achse 18 verstellbar abgestützt. Er wird mittels ebenfalls über den Umfang verteilter innerer Axial-Einstell-Schrauben 60 in Richtung der Mittel-Längs-Achse 18 verstellt und fixiert. Diese inneren Axial-Einstell-Schrauben 60 sind - wie ebenfalls Fig. 3 entnehmbar ist - an dem inneren Radial-Einstell-Ring 53 abgestützt. Durch Verstellung des inneren Axial-Einstell-Rings 54 wird die Spaltweite des Innen-Düsen-Kanals 51 am Innen-Düsen-Austritt 49 verändert.

Wie ebenso insbesondere Fig. 3 entnehmbar ist, kann die Außen-Düse 22 mittels einer Außen-Düsen-Einstell-Einrichtung 61 sowohl in Richtung der Mittel-Längs-Achse 18 als auch radial hierzu eingestellt werden, sodass auch die Spaltweite der Außen-Düse 22 im Bereich ihres Außen-Düsen-Austritts 62 eingestellt werden kann, und zwar auch mit über den Umfang des Außen-Düsen-Austritts 62 veränderlicher, also unterschiedlicher Spaltweite. Hierzu ist auf dem Außen-Düsenmantel 29 ein äußerer Tragring 63 ortsfest angebracht, der den sich kegelstumpfförmig an den äußeren Schmelzekanal 20 anschließenden Außen-Düsen-Kanal 64 auf der der Mittel-Längs-Achse 18 radial abgewandten Seite, also nach außen begrenzt. Auf seiner Innenseite wird der Außen-Düsen-Kanal 64 beginnend am äußeren Schmelzekanal 20 bis zum Außen-Düsen-Austritt 62 durch einen Gegenring 65 mit kegelstumpfförmiger Außenfläche begrenzt, der am Außen-Düsendorn 28 ortsfest angebracht ist.

Auf dem äußeren Tragring 63 ist ein äußerer Radial-Einstell-Ring 66 angeordnet, auf dem wiederum ein äußerer Axial-Einstell-Ring 67 angeordnet ist. Der äußere Radial-Einstell-Ring 66 liegt mit einer radial zur Mittel-Längs-Achse 18 verlaufenden Anlagefläche 68 gegen eine entsprechend verlaufende Gegenfläche 69 des äußeren Tragrings 63 an, sodass der äußere Radial-Einstell-Ring 66 radial zur Mittel-Längs-Achse 18 auf dem äußeren Tragring 63 verschoben werden kann, wodurch die Spaltweite des Außen-Düsen-Kanals 64 im Bereich des äußeren Radial-Einstell-Rings 66 über den Umfang des Außen-Düsen-Kanals 64 unterschiedlich eingestellt werden kann. Eine derartige Einstellung erfolgt mittels mehrerer über den Umfang verteilter äußerer Radial-Einstell-Schrauben 70, die am äußeren Radial-Einstell-Ring 66 radial zur Mittel-Längs-Achse 18 verstellbar angeordnet sind und gegen eine zylindrische Ringfläche 71 anliegen, die am äußeren Tragring 63 ausgebildet ist. Der äußere Radial-Einstell-Ring 66 wird in einer mittels der äußeren Radial-Einstell-Schrauben 70 eingestellten Position mittels mehrerer in gleichen Winkelabständen über den Umfang verteilter äußerer Fixierschrauben 72 fest mit dem äußeren Tragring 63 verbunden.

Der äußere Axial-Einstell-Ring 67 ist auf dem äußeren Radial-Einstell-Ring 66 spielfrei, also abdichtend in Richtung der Mittel-Längs-Achse 18 verstellbar abgestützt. Er wird mittels ebenfalls über den Umfang verteilter äußerer Axial-Einstell-Schrauben 73 in Richtung der Mittel-Längs-Achse 18 verstellt und fixiert. Diese äußeren Axial-Einstell-Schrauben 73 sind - wie ebenfalls Fig. 3 entnehmbar ist - an dem äußeren Radial-Einstell-Ring 66 abgestützt. Durch Verstellung des äußeren Axial-Einstell-Rings 67 wird die Spaltweite des Außen-Düsen-Kanals 64 am Außen-Düsen-Austritt 62 verändert.

Wie sich aus dem Vorstehenden ergibt, sind die Innen-Düsen-Einstell-Einrichtung 48 und die Außen-Düsen-Einstell-Einrichtung 61 nach dem Herausziehen des Spritzkopfes 8 aus der Formmaschine 6 frei zugänglich und können eingestellt werden.

Die Ausgestaltungen der Innen-Düsen-Einstell-Einrichtung und der Außen-Düsen-Einstell-Einrichtung nach der Erfindung lassen sich selbstverständlich auch bei anderen Spritzköpfen einsetzen, wie beispielsweise dem Spritzkopf nach der EP 2 116 352 B1.

## Patentansprüche

1. Spritzkopf (8) für eine Vorrichtung zur Herstellung eines aus einem glatten Innen-Rohr und einem mit diesem verschweißten, mit Wellenbergen (36) versehenen Außen-Rohr bestehenden Verbundrohres (10)
- mit einem konzentrisch zu einer Mittel-Längs-Achse (18) verlaufenden, zu einer Außen-Düse (22) führenden äußeren Schmelzekanal (20),
- mit einem den äußeren Schmelzekanal (20) auf seiner der Mittel-Längs-Achse (28) abgewandten Seite begrenzenden Außen-Düsenmantel (29),
- mit einem vom äußeren Schmelzekanal (20) zu einem Außen-Düsen-Austritt (62) der Außen-Düse (22) führenden, sich konisch erweiternden Außen-Düsen-Kanal (64),
- mit einer Außen-Düsen-Einstell-Einrichtung (61) zur radialen Einstellung der Außen-Düse (22),
- mit einem konzentrisch zu der Mittel-Längs-Achse (18) verlaufenden, zu einer Innen-Düse (21) führenden inneren Schmelzekanal (19)
- mit einem den inneren Schmelzekanal (19) auf seiner der Mittel-Längs-Achse (18) abgewandten Seite begrenzenden Innen-Düsenmantel (27),
- mit einem vom inneren Schmelzekanal (19) zu einem Innen-Düsen-Austritt (49) der Innen-Düse (21) führenden, sich konisch erweiternden Innen-Düsen-Kanal (51), und
- mit einer Innen-Düsen-Einstell-Einrichtung (48) zur radialen Einstellung der Innen-Düse (21), wobei die Innen-Düsen-Einstell-Einrichtung (48) am Innen-Düsenmantel (27) angeordnet ist und den sich konisch erweiternden Innen-Düsen-Kanal (51) zumindest teilweise auf seiner Außenseite begrenzt,
**dadurch gekennzeichnet,**
**dass** die Innen-Düsen-Einstell-Einrichtung (48) einen radial zur Mittel-Längs-Achse (18) verstellbaren inneren Radial-Einstell-Ring (53) aufweist, der den sich konisch erweiternden Innen-Düsen-Kanal (51) auf seiner Außenseite zumindest teilweise begrenzt, **dass** der innere Radial-Einstell-Ring (53) auf einem inneren Tragring (50) radial verstellbar angeordnet ist, der an dem Innen-Düsenmantel (27) ortsfest angebracht ist und der den sich kegelstumpfförmig an den inneren Schmelzekanal (19) anschließenden Innen-Düsen-Kanal (51) auf der der Mittel-Längs-Achse (18) radial abgewandten Seite begrenzt, und **dass** der innere Radial-Einstell-Ring (53) und der innere Tragring (50) mittels radial zur Mittel-Längs-Achse (18) verlaufender Flächen (55, 56) dichtend aneinander liegen.

2. Spritzkopf (8) nach Anspruch 1, **dadurch gekennzeichnet,**
**dass** die Außen-Düsen-Einstell-Einrichtung (61) am Außen-Düsenmantel (29) angeordnet ist und den sich konisch erweiternden Außen-Düsen-Kanal (64) zumindest teilweise auf seiner Außenseite begrenzt.

3. Spritzkopf (8) nach Anspruch 1 oder 2, **dadurch gekennzeichnet,**
**dass** der innere Radial-Einstell-Ring (53) mittels mehrerer über seinen Umfang verteilter, radial zur Mittel-Längs-Achse (18) angeordneter Radial-Einstell-Schrauben (57) einstellbar ist, die gegen eine RingFläche (58) am inneren Tragring (50) anliegen.

4. Spritzkopf (8) nach einem der Ansprüche 1 bis 3, **dadurch gekennzeichnet,**
**dass** der innere Radial-Einstell-Ring (53) mittels innerer Fixier-Schrauben (59) mit dem inneren Tragring (50) fest verbindbar ist.

5. Spritzkopf (8) nach einem der Ansprüche 1 bis 4, **dadurch gekennzeichnet,**
**dass** auf dem inneren Radial-Einstell-Ring (53) ein innerer Axial-Einstell-Ring (54) angeordnet und mittels innerer Axial-Einstell-Schrauben (60) verschiebbar und fixierbar ist, wobei der innere Radial-Einstell-Ring (54) die Spaltweite des Innen-Düsen-Kanals (51) im Bereich des Innen-Düsen-Austritts (49) begrenzt.

6. Spritzkopf (8) nach einem der Ansprüche 1 bis 5, **dadurch gekennzeichnet,**
**dass** die Außen-Düsen-Einstell-Einrichtung (61) einen radial zur Mittel-Längs-Achse (18) verstellbaren äußeren Radial-Einstell-Ring (66) aufweist, der den sich konisch erweiternden Außen-Düsen-Kanal (64) auf seiner Außenseite zumindest teilweise begrenzt.

7. Spritzkopf (8) nach einem der Ansprüche 1 bis 6, **dadurch gekennzeichnet,**
**dass** der äußere Radial-Einstell-Ring (66) auf einem äußeren Tragring (63) radial verstellbar angeordnet ist, der an dem Außen-Düsenmantel (29) ortsfest angebracht ist und der den sich kegelstumpfförmig an den äußeren Schmelzekanal (20) anschließenden Außen-Düsen-Kanal (64) auf der der Mittel-Längs-Achse (18) radial abgewandten Seite begrenzt.

8. Spritzkopf (8) nach einem der Ansprüche 1 bis 7, **dadurch gekennzeichnet,**
**dass** der äußere Radial-Einstell-Ring (66) und der äußere Tragring (63) mittels radial zur Mittel-Längs-Achse (18) verlaufenden Flächen (68, 69) dichtend aneinander liegen.

9. Spritzkopf (8) nach einem der Ansprüche 1 bis 8, **dadurch gekennzeichnet,**
**dass** der äußere Radial-Einstell-Ring (66) mittels mehrerer über seinen Umfang verteilter, radial zur Mittel-Längs-Achse (18) angeordneter, äußerer Radial-Einstell-Schrauben (70) einstellbar ist, die gegen eine Ringfläche (71) am äußeren Tragring (63) anliegen.

10. Spritzkopf (8) nach einem der Ansprüche 1 bis 9, **dadurch gekennzeichnet,**
**dass** der äußere Radial-Einstell-Ring (66) mittels äußerer Fixier-Schrauben (72) mit dem äußeren Tragring (63) fest verbindbar ist.

11. Spritzkopf (8) nach einem der Ansprüche 1 bis 10, **dadurch gekennzeichnet,**
**dass** auf dem äußeren Radial-Einstell-Ring (66) ein äußerer Axial-Einstell-Ring (67) angeordnet und mittels äußerer Axial-Einstell-Schrauben (73) verschiebbar und fixierbar ist, wobei der äußere Radial-Einstell-Ring (66) die Spaltweite des Außen-Düsen-Kanals (64) im Bereich des Außen-Düsen-Austritts (62) begrenzt.

## Claims

1. Extrusion head (8) for an apparatus for the production of a twin-wall pipe (10) consisting of a smooth internal pipe and an external pipe welded thereto and provided with corrugations (36), comprising
- an external melt channel (20) extending concentrically to a centre longitudinal axis (18) and leading to an external nozzle (22),
- an external nozzle casing (29) delimiting the external melt channel (20) on its side facing away from the centre longitudinal axis (28),
- an external nozzle channel (64) leading from the external melt channel (20) to an external nozzle outlet (62) of the external nozzle (22), said external nozzle channel (64) expanding conically,
- an external nozzle adjustment device (61) for radial adjustment of the external nozzle (22),
- an internal melt channel (19) extending concentrically to the centre longitudinal axis (18) and leading to an internal nozzle (21),
- an internal nozzle casing (27) delimiting the internal melt channel (19) on its side facing away from the centre longitudinal axis (18),
- an internal nozzle channel (51) leading from the internal melt channel (19) to an internal nozzle outlet (49) of the internal nozzle (21), the internal nozzle channel (51) expanding conically, and,
- an internal nozzle adjustment device (48) for radial adjustment of the internal nozzle (21), wherein the internal nozzle adjustment device (48) is arranged at the internal nozzle casing (27) and delimits the conically expanding internal nozzle channel (51) at least partly on its outside,
**characterized in**
**that** the internal nozzle adjustment device (48) has an internal radial adjustment ring (53) that is displaceable in a direction radial to the centre longitudinal axis (18) and delimits the conically expanding internal nozzle channel (51) partly on its outside,
**that** the internal radial adjustment ring (53) is radially displaceably arranged on an internal support ring (50), which is arranged immovably on the internal nozzle casing (27), and which delimits the internal nozzle channel (51) adjoining the internal melt channel (19) in the shape of a truncated cone on the side facing away from the centre longitudinal axis (18), and
**that** the internal radial adjustment ring (53) and the internal support ring (50) abut against each other in a sealing manner by means of faces (55, 56) extending radially to the centre longitudinal axis (18).

2. Extrusion head (8) according to claim 1, **characterized in**
**that** the external nozzle adjustment device (61) is arranged at the external nozzle casing (29) and delimits the conically expanding external nozzle channel (64) at least partly on its outside.

3. Extrusion head (8) according to claim 1 or 2, **characterized in**
**that** the internal radial adjustment ring (53) is adjustable by means of a plurality of radial adjustment screws (57) distributed across its periphery and arranged radially to the centre longitudinal axis (18), said radial adjustment screws (57) abutting against a ring face (58) of the internal support ring (50).

4. Extrusion head (8) according to one of claims 1 to 3, **characterized in that** the internal radial adjustment ring (53) is firmly connectable to the internal support ring (50) by means of internal fastening screws (59).

5. Extrusion head (8) according to one of claims 1 to 4, **characterized in that** on the internal radial adjustment ring (53), an internal axial adjustment ring (54) is arranged that is displaceable and lockable in place by means of internal axial adjustment screws (60), wherein the internal radial adjustment ring (54) delimits the gap width of the internal nozzle channel (51) in the region of the internal nozzle outlet (49).

6. Extrusion head (8) according to one of claims 1 to 5, **characterized in that** the external nozzle adjustment device (61) has an external radial adjustment ring (66) displaceable in the direction radial to the centre longitudinal axis (18), said radial adjustment ring (66) delimiting the conically expanding external nozzle channel (64) at least partly on its outside.

7. Extrusion head (8) according to one of claims 1 to 6, **characterized in that** the external radial adjustment ring (66) is arranged on an external support ring (63) in such a way as to be radially displaceable, said external support ring (63) being arranged immovably on the external nozzle casing (29) and delimiting the external nozzle channel (64) adjoining the external melt channel (20) in the shape of a truncated cone on the side facing away from the centre longitudinal axis (18).

8. Extrusion head (8) according to one of claims 1 to 7, **characterized in that** the external radial adjustment ring (66) and the external support ring (63) abut against each other in a sealing manner by means of faces (68, 69) extending radially to the centre longitudinal axis (18).

9. Extrusion head (8) according to one of claims 1 to 8, **characterized in that** the external radial adjustment ring (66) is adjustable by means of a plurality of external radial adjustment screws (70) distributed across its periphery and arranged radially to the centre longitudinal axis (18), said radial adjustment screws (70) abutting against a ring face (71) of the external support ring (63).

10. Extrusion head (8) according to one of claims 1 to 9, **characterized in that** the external radial adjustment ring (66) is firmly connectable to the external support ring (63) by means of external fastening screws (72).

11. Extrusion head (8) according to one of claims 1 to 10, **characterized in**
**that** on the external radial adjustment ring (66), an external axial adjustment ring (67) is arranged that is displaceable and lockable in place by means of external axial adjustment screws (73), wherein the external radial adjustment ring (66) delimits the gap width of the external nozzle channel (64) in the region of the external nozzle outlet (62).

## Revendications

1. Tête d'extrusion (8) pour un dispositif de fabrication d'un tuyau composite (10) constitué d'un tuyau intérieur lisse et d'un tuyau extérieur muni d'ondulations (36) soudé avec ce premier
- doté d'un canal de fusion (20) extérieur s'étendant concentriquement par rapport à un axe longitudinal central (18), menant vers une buse extérieure (22),
- doté d'une enveloppe de buse extérieure (29) délimitant sur son côté opposé à son axe longitudinal central (28) le canal de fusion (20) extérieur,
- doté d'un canal de buse extérieur (64) s'élargissant en cône menant du canal de fusion extérieur (20) vers une sortie de buse extérieure (62) de la buse extérieure (22),
- doté d'un dispositif de réglage de buse extérieure (61) pour le réglage radial de la buse extérieure (22),
- doté d'un canal de fusion intérieur (19) s'étendant concentriquement par rapport à l'axe longitudinal central (18) menant vers une buse intérieure (21),
- doté d'une enveloppe de buse intérieure (27) délimitant le canal de fusion intérieur (19) du côté opposé à l'axe longitudinal central (18),
- doté d'un canal de buse intérieur (51), s'élargissant en cône menant du canal de fusion intérieur (19) vers une sortie de buse intérieure (49) de la buse intérieure (21),
- doté d'un dispositif de réglage de buse intérieure (48) pour le réglage radial de la buse intérieure (21), le dispositif de réglage de buse intérieure (48) étant disposé sur l'enveloppe de buse intérieure (27) et délimitant le canal de buse intérieure (51) d'élargissant en cône au moins partiellement sur son côté extérieur,
**caractérisée en ce**
**que** le dispositif de réglage de buse intérieure (48) présente un anneau de réglage radial (53) intérieur réglable radialement par rapport à l'axe longitudinal central (18) qui limite au moins partiellement le canal de buse intérieur (51) s'élargissant en cône sur son côté extérieur,
**que** l'anneau de réglage radial (53) intérieur est disposé en étant réglable radialement sur un anneau support (50) interne qui est rapporté à un endroit fixe sur l'enveloppe de buse intérieure (27) et qui délimite le canal de buse intérieure (51) faisant suite au canal de fusion intérieur (19) en forme de cône tronqué sur le côté opposé radialement à l'axe longitudinal central (18), et
**que** l'anneau de réglage radial (53) intérieur et l'anneau support intérieur (50) se situent l'un contre l'autre de manière étanche au moyen de surfaces (55, 56) s'étendant radialement par rapport à l'axe longitudinal central (18).

2. Tête d'extrusion (8) selon la revendication 1, **caractérisée en ce que** le dispositif de réglage de buse extérieure (61) est disposé sur l'enveloppe de buse extérieure (29) et délimite le canal de buse extérieur (64) s'élargissant en cône au moins partiellement sur son côté extérieur.

3. Tête d'extrusion (8) selon la revendication 1 ou 2, **caractérisée en ce que** l'anneau de réglage radial (53) intérieur peut être réglé au moyen de plusieurs vis de réglage radial (57) disposées radialement par rapport à l'axe longitudinal central (18) distribuées sur son pourtour, qui s'appuient contre une surface annulaire (58) sur l'anneau support intérieur (50).

4. Tête d'extrusion (8) selon l'une des revendications 1 à 3, **caractérisée en ce que** l'anneau de réglage radial (53) intérieur peut être relié solidement avec l'anneau support (50) intérieur au moyen de vis de fixation (59) intérieures.

5. Tête d'extrusion (8) selon l'une des revendications 1 à 4, **caractérisée en ce qu'**un anneau de réglage axial (54) intérieur est disposé sur l'anneau de réglage radial (53) intérieur et peut être déplacé et fixé au moyen de vis de réglage axial (60) intérieures, l'anneau de réglage radial (54) intérieur délimitant la largeur de fente du canal de buse intérieur (51) dans la zone de la sortie de buse intérieure (49).

6. Tête d'extrusion (8) selon l'une des revendications 1 à 5, **caractérisée en ce que** le dispositif de réglage de buse extérieure (61) présente un anneau de réglage radial (66) extérieur réglable radialement au moyen de l'axe longitudinal central (18) qui délimite le canal de buse extérieur (64) s'élargissant en cône au moins partiellement sur son côté extérieur.

7. Tête d'extrusion (8) selon l'une des revendications 1 à 6, **caractérisée en ce que** l'anneau de réglage radial (66) extérieur est disposé en étant réglable radialement sur un anneau support extérieur (63) qui est rapporté à un endroit fixe sur l'enveloppe de buse extérieure (29) et qui délimite le canal de buse extérieur (64) faisant suite au canal de fusion (20) extérieur s'élargissant en cône sur le côté opposé radialement à l'axe longitudinal central (18).

8. Tête d'extrusion (8) selon l'une des revendications 1 à 7, **caractérisée en ce que** l'anneau de réglage radial (66) extérieur et l'anneau support (63) extérieur se situent l'un à côté de l'autre de manière étanche au moyen de surfaces (68, 69) s'étendant radialement par rapport à l'axe longitudinal central (18).

9. Tête d'extrusion (8) selon l'une des revendications 1 à 8, **caractérisée en ce que** l'anneau de réglage radial (66) extérieur peut être réglé au moyen de plusieurs vis de réglage radial (70) extérieurs disposées radialement par rapport à l'axe longitudinal central (18) qui s'appuient contre une surface annulaire (71) sur l'anneau support (63) extérieur.

10. Tête d'extrusion (8) selon l'une des revendications 1 à 9, **caractérisée en ce que** l'anneau de réglage radial (66) extérieur peut être relié solidement avec l'anneau support (63) extérieur au moyen de vis de fixation (72) extérieures.

11. Tête d'extrusion (8) selon l'une des revendications 1 à 10, **caractérisée en ce qu'**un anneau de réglage axial (67) extérieur est disposé sur l'anneau de réglage radial (66) extérieur et peut être déplacé et fixé au moyen de vis de réglage axial (73) extérieures, l'anneau de réglage radial (66) extérieur délimitant la largeur de fente du canal de buse extérieur (64) dans la zone de la sortie de buse extérieure (62).
